# EUROPEAN PATENT SPECIFICATION

(11) **EP 3 072 731 B1**
(45) Date of publication and mention of the grant of the patent: **04.05.2022**
(21) Application number: 15305432.5
(22) Date of filing: 25.03.2015
(51) Int. Cl.: B60M 1/30

(54) **CONDUCTOR RAIL FOR TRANSMITTING ELECTRIC ENERGY TO A TRAIN**
STROMSCHIENE ZUR ÜBERTRAGUNG ELEKTRISCHER ENERGIE ZU EINEM ZUG
RAIL CONDUCTEUR POUR LA TRANSMISSION D'ÉNERGIE ÉLECTRIQUE À UN TRAIN

(43) Date of publication of application: 28.09.2016
(73) Proprietor: ALSTOM Transport Technologies, 93400 Saint-Ouen (FR)
(72) Inventor: Bonacina, Livio, 23892 Bulciago (LC) (IT); Formenti, Leonardo, 23891 Barzano (LC) (IT); Bassani, Felice, 22031 Albavilla (CO) (IT); Bormetti, Cristian, 22100 Como (IT)
(74) Representative: Lavoix

(56) References cited:
- WO-A1-2006/081863
- CN-A- 102 350 959
- CN-A- 104 118 335
- CN-U- 203 995 753
- CN-U- 203 995 754
- US-A1- 2007 207 633

## Description

The invention concerns a conductor rail for transmitting electric energy to a train.

Many types of conductor rails have been previously provided which are used in electric railway systems. The conductor rails of the prior art include a main body of aluminum and a facing cap made of stainless steel material to provide a wear resisting engagement surface for a contact shoe which slides against the top surface of the facing cap rather than the top surface of the main body.

The prior art facing caps include many different designs and many different methods of attaching the facing cap to the main body. In some cases, the facing caps are snapped into place on a head portion of the main body such as disclosed in FR-A-2 286 680, in which the facing cap is crimped by deforming portions of the aluminum main body. Another type of means of attaching the facing cap to the head portion is disclosed in US-B-5 047 595, in which two horizontal J-shaped members are welded together at the top of the main body. The requirements of the weldment which attach the two J-shaped members to the head portion in this patent shorten the life of the contact shoe which will slide upon the weldment even though the weldment has been smoothed.

EP-B-1 683 676 discloses a conductor rail in which the facing cap comprises a central portion which includes two wings extending on lateral sides of the head portion, and two longitudinal plates inserted in channels extending below the head portion and which are welded to the wings of the central portion.

CN 203 995 753 U discloses a conductor rail according to the preamble of claim 1.

Such a design implies a very accurate tolerance on the facing surfaces of the facing cap and the head portion to guarantee the electrical contact. Moreover, the welding seams are provided on an area of the conductor rail located below the head portion. This implies the need to perform welding on unfavorable areas or to put the rail upside down to ease the weldings, which is unfavorable.

The aim of the invention is to provide a new conductor rail in which the manufacturing of the facing cap is easier and more reliable than in the prior art.

To this end, the invention concerns a conductor rail as defined in the appended set of claims.

Thanks to the invention, the central portion of the facing cap is very easy to manufacture.

The invention will now be explained in reference to the annexed drawings, as an illustrative example. In the annexed drawings:
- figure 1 is a sectional perspective view of a portion of a conductor rail according to the invention;
- figure 2 is a transversal sectional view of the conductor rail of figure 1;

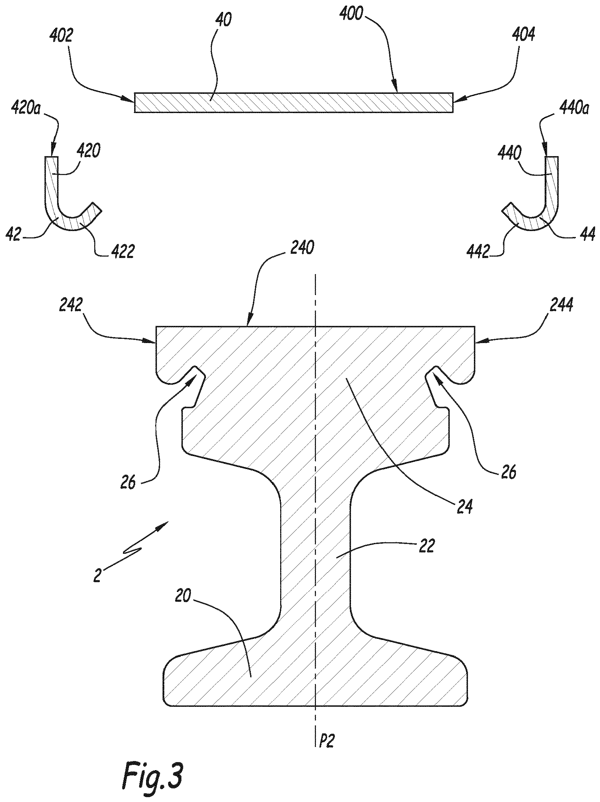

- figure 3 is an exploded transversal sectional view of a conductor rail according to the invention, in a configuration before mounting and welding of a facing cap of the conductor rail.

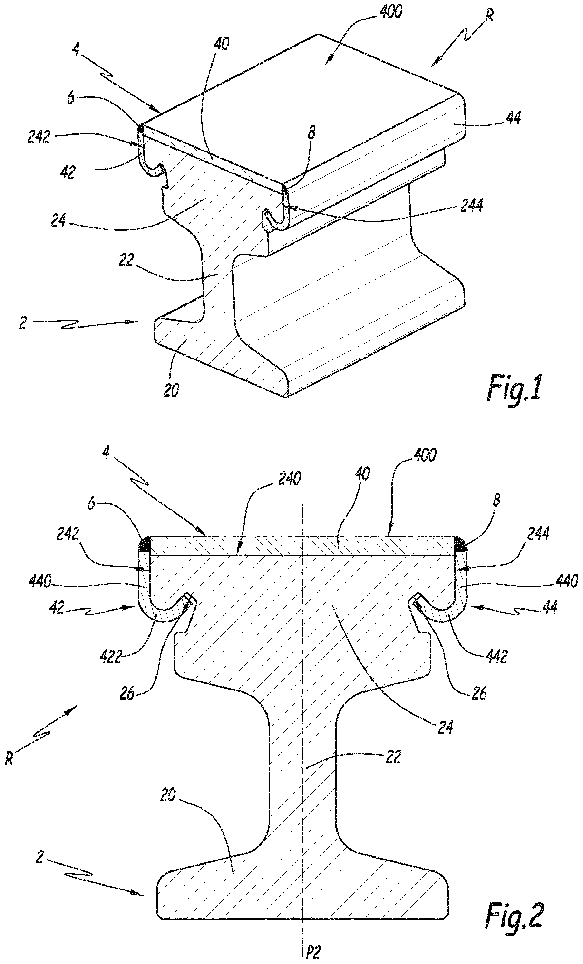

Figure 1 shows a portion of a conductor rail R for transmitting electric energy to a train. The rail R comprises a main body 2, made of a high conductivity aluminum alloy, such as EN AW 6101. The rail R also includes a facing cap 4 attached to the main body 2. The facing cap 4 is made of stainless steel, preferably a ferritic series stainless steel having a 2B finish and containing more than 11% of chromium. The facing cap provides a protection against wear and corrosion for the aluminum main body 2.

The main body 2 comprises a base portion 20, a stem portion 22 and a head portion 24. Head portion 24 includes a top surface 240 and lateral sides 242 and 244. The main body 2 is adapted to be mounted on a horizontal surface, and the stem portion 22 defines a vertical direction of the main body 2. Along this vertical direction, the base portion 20 denotes the lower side of the main body 2, while the head portion 24 denotes the upper side of the main body 2.

The facing cap 4 comprises a central portion 40 which bears a top surface 400 on which a conductive shoe of a train is adapted to slide. The central portion 40 is adapted to lay against the top surface 240 of the head portion 24 in a tight contact allowing maximal electrical conduction. The central portion 40 comprises lateral edges 402 and 404 which extend in the alignment of the lateral sides 242 and 244 of the head portion 24, in a substantially vertical plan.

The facing cap 4 also includes two lateral portions 42 and 44 arranged against the lateral sides 242 and 244. More precisely, the lateral portions 42 and 44 have a shape complementary of the lateral sides 242 and 244 of the head portion 24.

According to the invention, the lateral portions 42 and 44 have a transversal J-shape including respective straight sections 420 and 440, substantially vertical, which respectively lay against lateral sides 242 and 244, and curved sections 422 and 442. The lateral portions 42 and 44 are mounted symmetrically with respect to a central longitudinal plane P2 of the main body 2.

According to the invention, the main body 2 comprises two longitudinal grooves 26 provided on an intersection area between the head portion 24 and the stem portion 22 below the top surface 240. The shape of the area extending between the sides 242 and 244 and the grooves 26 is complementary to the shape of the lateral portions 42 and 44. The curved portions 422 and 442 are inserted in the longitudinal grooves 26. The grooves 26 have an open side oriented towards the lower side of the main body 2 and away from the central longitudinal plane P2.

The straight sections 420 and 440 preferably slightly overlap the lateral edges 402 and 404.

In a preferred embodiment, the central portion 40 and the lateral portions 42 and 44 are welded together by two welding seams 6 and 8 which are provided in two gaps extending between the lateral edge 402 and an end 420a of the straight section 420 on the first hand, and between the lateral edge 404 and an end 440a of the straight section 440. The welding seams 6 and 8 are above the ends 420a and 440a of the lateral portions 42 and 44, and at a height near of the height of the top surface 240 of the head portion 24. Therefore, the welding procedure can be accomplished easily.

The welding parameters are controlled so that the welded materials cool after the welding operation has been completed, in order for the facing cap 4 to contract and induce a stress within the material which secures, thanks to a clamping engagement with the main body 2, the facing cap 4 to the main body 2. The lateral portions 42 and 44, together with the shape of the grooves 26, achieve a clamping which induces a tight contact between the top surface 240 and the central portion 40.

After welding, thanks to the J-shape of the lateral portion 42, 44, a pressure is applied between the central portion 40 and the head portion 24, by pulling them against each other (spring effect). Therefore, the electrical contact is improved.

After the welding operation has been completed, the upper part of the facing cap 4 is machined to remove any excess weld material and to guarantee that the top surface 400 has the required smooth finish. The welding seams 6 and 8 may be chamfered by mill machining, grinding or manual machining.

In order to ensure an effective electrical connection between the aluminum main body 2 and the facing cap 4, the top surface 240 and the lateral sides 242 and 244, which will be engaged with the facing cap 4, can be subjected to a pretreatment to answer removal of the surface layer of aluminum oxide. This pretreatment can involve abrasion by wire brushes, followed by a greasing using, for example, zinc-loaded grease for increasing electrical contact between the main body 2 and the facing cap 4 and avoid corrosion. The aluminum oxide is removed along the entire length of the main body 2.

The central portion 40 and/or the lateral portions 42 and 44 may be manufactured by roll forming, which allows increasing the mechanical resistance of steel by work hardening. The facing cap 4 is manufactured with tight tolerances so that the contact between the facing cap 4 and the main body 2 is as intimate as possible.

According to a non shown embodiment of the invention, instead of being flat, the central portion 40 may be slightly curved.

According to a non-shown embodiment of the invention, the conductor rail may have different sizes and profiles (according to different uses and loads), but present the same concept of the coupling between the head portion 24 and the facing cap 4, as defined in the claims.

## Claims

1. Conductor rail (R) for transmitting electric energy to a train, comprising:
- a main body (2) made of high conductivity aluminum alloy, including an upper head portion (24), a stem portion (22) and a lower base portion (20),
- a facing cap (4) made of stainless steel, on which a conductive shoe is adapted to slide, said facing cap (4) comprising a central portion (40) adapted to lay against a top surface (240) of the upper head portion (24) and two lateral portions (42, 44) arranged against lateral sides (242, 244) of the upper head portion (24) and welded to the central portion (40) so that the facing cap (4) is secured to the main body (2),
the lateral edges (402, 404) of the central portion (40) extending in the alignment of the lateral sides (242, 244) of the upper head portion (24), each lateral portion (42, 44) having a transversal J-shape having a substantially constant thickness and including a straight section (420, 440) laying against a lateral side (242, 244) of the upper head portion (24), and a curved section (422, 442) having a first side, a second side and an end side connecting said first and second sides, the main body (2) comprising two longitudinal grooves (26) provided on an intersection area between the head portion (24) and the stem portion (22) below the top surface (240) of the upper head portion (24), and in which the curved sections (422, 442) of the lateral portions (42, 44) are inserted, wherein the shape of the area extending between the lateral sides (242, 244) of the upper head portion (24) and the grooves (26) is complementary to the shape of the lateral portions (42, 44) of the facing cap (4), wherein the grooves (26) are inclined downwardly with respect to a central symmetry plane (P2) of the main body (2) passing through the upper head portion (24), the stem portion (22) and the lower base portion (24) and with respect to which plane (P2) said two lateral portions (42, 44) are mounted symmetrically,
and wherein the grooves (26) have an upper lateral side laying against said first side of the curved section (422, 442), a second lower lateral side, an inner bottom side connecting said upper and lower lateral sides, and an outer open side which is opposite to the inner bottom side and is oriented towards a lower side of the main body (2) and away from said central plane (P2) of the main body (2),
**characterized in that** the longitudinal grooves (26) are broader than the curved sections (422, 442) of the lateral portions (42, 44) and each groove (26) is defined to set at least a space between the inserted ending of the curved section (422, 442) and the groove (26),
wherein said outer open side is wider than said inner bottom side, the grooves (26) further comprising a straight portion which extends outwardly from the end of the respective lower lateral side at said outer open side in a direction substantially perpendicular to said central symmetry plane (P2), and
wherein the at least a space between the inserted ending of the curved section (422, 442) and the groove (26) opens on the outside of the rail (R) and is a continuous space formed between said inner bottom side of the grooves (26) and said end side of the curved section (422, 442) and between said lower lateral side of the grooves (26) and said second side of the curved section (422, 442), the space between said lower lateral side of the grooves (26) and said second side of the curved section (422, 442) widening continuously when proceeding from the inner bottom side to the outer open side.

2. Conductor rail according to claim 1, wherein the central portion (40) and the lateral portions (42, 44) are welded together by two welding seams (6, 8) provided in gaps extending between the lateral edges (402, 404) of the central portion (40) and ends (420a, 440a) of the straight sections (420, 440) of the lateral portions (42, 44).

3. Conductor rail according to any preceding claim, wherein the straight sections (420, 440) of the lateral portions (42, 44) overlap the lateral edges (402, 404) of the central portion (40).

4. Conductor rail according to any preceding claim, wherein the welding seams (6, 8) are chamfered.

## Patentansprüche

1. Stromschiene (R) zur Übertragung von elektrischer Energie auf einen Zug, bestehend aus:
- einen Hauptkörper (2) aus einer hochleitfähigen Aluminiumlegierung, der einen oberen Kopfteil (24), einen Schaftteil (22) und einen unteren Basisteil (20) umfasst,
- eine Verkleidungskappe (4) aus rostfreiem Stahl, auf der ein leitender Schuh gleiten kann, wobei die Verkleidungskappe (4) einen mittleren Teil (40), der an einer oberen Fläche (240) des oberen Kopfteils (24) anliegen kann, und zwei seitliche Teile (42, 44) umfasst, die an den Seiten (242, 244) des oberen Kopfteils (24) angeordnet und mit dem mittleren Teil (40) verschweißt sind, so dass die Verkleidungskappe (4) am Hauptkörper (2) befestigt ist,
die seitlichen Ränder (402, 404) des Mittelteils (40) sich in der Flucht der seitlichen Seiten (242, 244) des oberen Kopfteils (24) erstrecken, wobei jeder seitliche Teil (42, 44) eine quer verlaufende J-Form mit einer im Wesentlichen konstanten Dicke aufweist und einen geraden Abschnitt (420, 440) umfasst, der an einer seitlichen Seite (242, 244) des oberen Kopfteils (24) anliegt, und einen gekrümmten Abschnitt (422, 442) mit einer ersten Seite, einer zweiten Seite und einer Endseite, die erste und die zweite Seite verbindet, wobei der Hauptkörper (2) zwei Längsnuten (26) aufweist, die in einem Schnittbereich zwischen dem Kopfteil (24) und dem Schaftteil (22) unterhalb der oberen Fläche (240) des oberen Kopfteils (24) vorgesehen sind, und in die gekrümmten Abschnitte (422, 442) der seitlichen Abschnitte (42, 44) eingesetzt sind, wobei die Form des Bereichs, der sich zwischen den seitlichen Seiten (242, 244) des oberen Kopfabschnitts (24) und den Nuten (26) erstreckt, komplementär zu der Form der seitlichen Abschnitte (42, 44) der Verkleidungskappe (4) ist, wobei die Nuten (26) in Bezug auf eine zentrale Symmetrieebene (P2) des Hauptkörpers (2), die durch den oberen Kopfteil (24), den Schaftteil (22) und den unteren Bodenteil (24) verläuft, nach unten geneigt sind und in Bezug auf diese Ebene (P2) die beiden Seitenteile (42, 44) symmetrisch angebracht sind,
und wobei die Nuten (26) eine obere seitliche Seite, die an der ersten Seite des gekrümmten Abschnitts (422, 442) anliegt, eine zweite untere seitliche Seite, eine innere Bodenseite, die obere und die untere seitliche Seite verbindet, und eine äußere offene Seite haben, die der inneren Bodenseite gegenüberliegt und zu einer unteren Seite des Hauptkörpers (2) und von der Mittelebene (P2) des Hauptkörpers (2) weg orientiert ist, **dadurch gekennzeichnet, dass** die Längsnuten (26) breiter sind als die gekrümmten Abschnitte (422, 442) der Seitenteile (42, 44) und dass jede Nut (26) so definiert ist, dass sie mindestens einen Abstand zwischen dem eingefügten Ende des gekrümmten Abschnitts (422, 442) und der Nut (26) festlegt,
wobei die äußere offene Seite breiter ist als die innere Bodenseite, wobei die Nuten (26) ferner einen geraden Abschnitt umfassen, der sich vom Ende der jeweiligen unteren seitlichen Seite an der äußeren offenen Seite in einer Richtung im Wesentlichen senkrecht zur zentralen Symmetrieebene (P2) nach außen erstreckt, und
wobei der mindestens eine Raum zwischen dem eingefügten Ende des gebogenen Abschnitts (422, 442) und der Nut (26) sich zur Außenseite der Schiene (R) hin öffnet und ein durchgehender Raum ist, der zwischen der inneren Bodenseite der Nuten (26) und der Endseite des gebogenen Abschnitts (422, 442) und zwischen der unteren seitlichen Seite der Nuten (26) und der zweiten Seite des gebogenen Abschnitts (422, 442) gebildet wird, wobei sich der Raum zwischen der unteren seitlichen Seite der Nuten (26) und der zweiten Seite des gebogenen Abschnitts (422, 442) kontinuierlich erweitert, wenn man von der inneren Bodenseite zur äußeren offenen Seite fortschreitet.

2. Stromschiene nach Anspruch 1, bei der das Mittelteil (40) und die Seitenteile (42, 44) durch zwei Schweißnähte (6, 8) miteinander verschweißt sind, die in Lücken vorgesehen sind, die sich zwischen den Seitenkanten (402, 404) des Mittelteils (40) und den Enden (420a, 440a) der geraden Abschnitte (420, 440) der Seitenteile (42, 44) erstrecken.

3. Stromschiene nach einem der vorhergehenden Ansprüche, wobei die geraden Abschnitte (420, 440) der Seitenteile (42, 44) die Seitenkanten (402, 404) des Mittelteils (40) überlappen.

4. Stromschiene nach einem der vorhergehenden Ansprüche, wobei die Schweißnähte (6, 8) abgeschrägt sind.

## Revendications

1. Rail conducteur (R) pour la transmission d'énergie électrique à un train, comprenant :
- un corps principal (2) en alliage d'aluminium à haute conductivité, comprenant une partie de tête supérieure (24), une partie de tige (22) et une partie de base inférieure (20),
- une chape de revêtement (4) en acier inoxydable, sur laquelle un sabot conducteur est adapté pour coulisser, ladite chape de revêtement (4) comprenant une partie centrale (40) adaptée pour reposer contre une surface supérieure (240) de la partie de tête supérieure (24) et deux parties latérales (42, 44) agencées contre des côtés latéraux (242, 244) de la partie de tête supérieure (24) et soudées à la partie centrale (40) de sorte que la chape de revêtement (4) est fixée au corps principal (2),
les bords latéraux (402, 404) de la partie centrale (40) s'étendant dans l'alignement des côtés latéraux (242, 244) de la partie supérieure de tête (24), chaque partie latérale (42, 44) ayant une forme de J transversal ayant une épaisseur sensiblement constante et comprenant une section droite (420, 440) reposant contre un côté latéral (242, 244) de la partie supérieure de tête (24), et une section incurvée (422, 442) ayant un premier côté, un second côté et un côté d'extrémité reliant lesdits premier et second côtés, le corps principal (2) comprenant deux rainures longitudinales (26) prévues sur une zone d'intersection entre la partie de tête (24) et la partie de tige (22) au-dessous de la surface supérieure (240) de la partie de tête supérieure (24), et dans lesquelles les sections incurvées (422, 442) des parties latérales (42, 44) sont insérées, dans lequel la forme de la zone s'étendant entre les côtés latéraux (242, 244) de la partie de tête supérieure (24) et les rainures (26) est complémentaire de la forme des parties latérales (42, 44) de la chape de revêtement (4), dans lequel les rainures (26) sont inclinées vers le bas par rapport à un plan de symétrie central (P2) du corps principal (2) passant par la partie de tête supérieure (24), la partie de tige (22) et la partie de base inférieure (24) et par rapport auquel plan (P2) lesdites deux parties latérales (42, 44) sont montées symétriquement, et dans lequel les rainures (26) ont un côté latéral supérieur reposant contre ledit premier côté de la section incurvée (422, 442), un second côté latéral inférieur, un côté de fond intérieur reliant lesdits côtés latéraux supérieur et inférieur, et un côté ouvert extérieur qui est opposé au côté de fond intérieur et est orienté vers un côté inférieur du corps principal (2) et à l'écart dudit plan central (P2) du corps principal (2),
**caractérisé en ce que** les rainures longitudinales (26) sont plus larges que les sections incurvées (422, 442) des parties latérales (42, 44) et chaque rainure (26) est définie pour établir au moins un espace entre l'extrémité insérée de la section incurvée (422, 442) et la rainure (26),
dans lequel ledit côté ouvert extérieur est plus large que ledit côté inférieur intérieur, les rainures (26) comprenant en outre une partie droite qui s'étend vers l'extérieur depuis l'extrémité du côté latéral inférieur respectif au niveau dudit côté ouvert extérieur dans une direction sensiblement perpendiculaire audit plan de symétrie central (P2), et
dans lequel le au moins un espace entre l'extrémité insérée de la section incurvée (422, 442) et la rainure (26) s'ouvre sur l'extérieur du rail (R) et est un espace continu formé entre ledit côté inférieur intérieur des rainures (26) et ledit côté d'extrémité de la section incurvée (422, 442) et entre ledit côté latéral inférieur des rainures (26) et ledit second côté de la section incurvée (422, 442), l'espace entre ledit côté latéral inférieur des rainures (26) et ledit second côté de la section incurvée (422, 442) s'élargissant de manière continue en allant du côté inférieur intérieur au côté ouvert extérieur.

2. Rail conducteur selon la revendication 1, dans lequel la partie centrale (40) et les parties latérales (42, 44) sont soudées ensemble par deux joints de soudure (6, 8) prévus dans des espaces s'étendant entre les bords latéraux (402, 404) de la partie centrale (40) et les extrémités (420a, 440a) des sections droites (420, 440) des parties latérales (42, 44).

3. Rail conducteur selon l'une quelconque des revendications précédentes, dans lequel les sections droites (420, 440) des parties latérales (42, 44) recouvrent les bords latéraux (402, 404) de la partie centrale (40).

4. Rail conducteur selon l'une quelconque des revendications précédentes, dans lequel les joints de soudure (6, 8) sont chanfreinés.
